# EUROPEAN PATENT APPLICATION

(11) **EP 4 708 480 A2**
(43) Date of publication of application: **11.03.2026**
(21) Application number: 25200165.6
(22) Date of filing: 04.09.2025
(51) Int. Cl.: H01M 50/15, H01M 50/152, H01M 50/176, H01M 50/179, H01M 50/188, H01M 50/557, H01M 50/56, H01M 50/562

(54) **POLE, COVER PLATE ASSEMBLY AND BATTERY CELL**

(30) Priority: 06.09.2024 CN 202411251821; 06.09.2024 CN 202422194867 U
(71) Applicant: HUIZHOU EVE POWER CO., LTD., Huizhou, Guangdong 516039 (CN); Eve Power Co., Ltd., Jingmen, Hubei 448000 (CN)
(72) Inventor: HE, Wei, Huizhou, Guangdong 516039 (CN); WANG, Jing, Huizhou, Guangdong 516039 (CN); ZHENG, Xu, Huizhou, Guangdong 516039 (CN); SHU, Kuanjin, Huizhou, Guangdong 516039 (CN); DUAN, Dong, Huizhou, Guangdong 516039 (CN); LIU, Ziwen, Huizhou, Guangdong 516039 (CN)
(74) Representative: Berggren Oy

(57) **Abstract**

The present application provides a pole for a battery cell, a cover plate assembly and a battery cell, related to the field of battery technology. The pole includes a first metal part and a second metal part; where the first metal part defines a first concave portion and a first convex portion, and the first convex portion protrudes from an opening of the first concave portion along a direction away from the first concave portion; the second metal part includes a terminal and a second convex portion, where the second convex portion protrudes outward from the terminal, and a side of the terminal close to the second convex portion is provided with a second concave portion; and, the first convex portion is embedded in the second concave portion, and the second convex portion is embedded in the first concave portion.

## Description

### TECHNICAL FIELD

The present application relates to the field of battery technology, and specifically relates to a pole, a cover plate assembly and a battery cell.

### BACKGROUND

A pole is an important component for connecting the inside and outside of a battery cell. One end of the pole is connected with an external circuit of the battery cell, and the other end is connected with an internal electrode assembly of a power battery. In order to reduce costs and weight, the external circuit of the battery cell adopts aluminum material for current transmission. However, inside the battery cell, a negative-electrode current collector and a current collector of a negative electrode sheet are made of the same material, which is copper material. Therefore, in order to improve conductivity of the pole and control weight and cost of the battery cell, a copper-aluminum composite pole is adopted to connect the negative-electrode current collector with the external circuit. The copper material of the copper-aluminum composite pole is connected with the negative-electrode current collector, and the aluminum material of the copper-aluminum composite pole is connected with the external circuit.

Since the copper material and the aluminum material have different melting points and different material fluidity, reliability of combination between the copper material and the aluminum material of the pole is poor, which further causes the copper material and the aluminum material to be easily separated from each other.

### SUMMARY

Embodiments of the present application provide a pole, a cover plate assembly and a battery cell, which can improve the reliability of the combination between the copper material and the aluminum material of the pole.

In a first aspect, embodiments of the present application provide a pole, including a first metal part and a second metal part; where the first metal part defines a first concave portion and a first convex portion, where the first convex portion protrudes from an opening of the first concave portion along a direction away from the first concave portion; and, the second metal part includes a terminal and a second convex portion, where the second convex portion protrudes outward from the terminal, a side of the terminal close to the second convex portion is provided with a second concave portion, and the second concave portion is disposed around the second convex portion; where the first convex portion is embedded in the second concave portion, the second convex portion is embedded in the first concave portion, and materials of the first metal part and the second metal part are different.

In an embodiment, a third concave portion is disposed on a bottom wall of the first concave portion, a third convex portion is disposed on an end of the second convex portion away from the terminal, and the third convex portion is embedded in the third concave portion.

In an embodiment, the third convex portion includes a first radial dimension φ1, and the first radial dimension φ1 gradually decreases along a direction close to the terminal.

In an embodiment, a fourth convex portion is disposed on the bottom wall of the first concave portion, a fourth concave portion is disposed on an end of the second convex portion away from the terminal, and the fourth convex portion is embedded in the fourth concave portion.

In an embodiment, the bottom wall of the first concave portion arches toward the second convex portion, to form the fourth convex portion in the first concave portion, and to form an inverse arch groove on a side of the first metal part away from the second metal part.

In an embodiment, an included angle between a groove wall of the inverse arch groove and an axis of the pole is σ, satisfying: 15°≤σ≤60°.

In an embodiment, the second convex portion includes a second radial dimension φ2, and the second radial dimension φ2 gradually decreases along a direction close to the terminal.

In an embodiment, along a radial direction, a gap is formed between an outer peripheral surface of the first convex portion and an outer peripheral surface of the second concave portion, and a distance of the gap is W1, satisfying: 0 <W1≤0. 1mm.

In an embodiment, a thickness of a wall of the first metal part forming the bottom wall of the first concave portion is D1, a thickness of a wall of the first metal part forming a side wall of the first concave portion is D2, a thickness of a wall of the first metal part forming the first convex portion is D3, satisfying: D1 >D2>D3.

In an embodiment, 0.5D1≤D2<D1, and/or 0.5D2≤D3 <D2.

In an embodiment, the material of the first metal part is copper material, and the material of the second metal part is aluminum material.

In an embodiment, a thickness range of the first metal part is 0.2mm~1mm.

In an embodiment, a current-carrying cross-section of the pole is S1, satisfying: S1≥10mm², and/or an area of a side of the terminal away from the second convex portion is S2, satisfying: 100 mm²≤S2≤300 mm².

In a second aspect, embodiments of the present application provide a cover plate assembly, including a cover plate, an upper plastic part, a lower plastic part, a current collector, a sealing ring and the aforementioned pole; where the pole penetrates through the cover plate, the terminal is located on one side of the cover plate, an end of the first metal part away from the terminal is located on another side of the cover plate; the upper plastic part is disposed between the terminal and the cover plate; the lower plastic part is disposed on another side of the cover plate; one end of the current collector is connected with the first metal part; and the sealing ring is disposed between the pole and a mounting hole; where the material of the first metal part is the same as material of the current collector.

In a third aspect, embodiments of the present application provide a battery cell, including a housing, an electrode assembly and the aforementioned cover plate assembly; where the housing has a containing cavity; the electrode assembly is disposed in the containing cavity; the cover plate is connected with the housing and closes an opening of the containing cavity, another end of the current collector is connected with the electrode assembly; and, the terminal and the first convex portion are both located on a side of the cover plate away from the electrode assembly.

Beneficial effects of the embodiments of the present application are as follows.

In the embodiments of the present application, the second convex portion is disposed to be embedded in the first concave portion to form a combination structure of the first metal part and the second metal part in the axial direction of the pole, and the first convex portion is embedded in the second concave portion to form a combination structure of the first metal part and the second metal part in the radial direction of the pole. In this way, on the premise that the height dimension of the pole is fixed, the area of the combination surface between the first metal part and the second metal part can be increased, and the electrode assembly can pull the first metal part, and the cover plate can push the first convex portion toward the terminal, thereby improving the reliability of the combination between the first metal part and the second metal part.

### BRIEF DESCRIPTION OF THE DRAWINGS

To more clearly illustrate the technical solutions in the embodiments of the present application, the drawings required for describing the embodiments will be briefly introduced below. Obviously, the drawings in the following description are merely some embodiments of the present application. For those skilled in the art, other drawings can also be obtained based on these drawings without making creative labor.
Fig. 1 is a schematic structural diagram of a pole provided by embodiments of the present application;
Fig. 2 is a schematic structural diagram of a first longitudinal section of the pole provided by embodiments of the present application;
Fig. 3 is a schematic structural diagram of another pole provided by embodiments of the present application;
Fig. 4 is a schematic structural diagram of a second longitudinal section of the pole provided by embodiments of the present application;
Fig. 5 is a schematic structural diagram of a third longitudinal section of the pole provided by embodiments of the present application;
Fig. 6 is an enlarged view of portion A in Fig. 5;
Fig. 7 is an enlarged view of portion B in Fig. 2;
Fig. 8 is a schematic structural diagram of a cover plate assembly provided by embodiments of the present application;
Fig. 9 is a schematic structural diagram of another cover plate assembly provided by embodiments of the present application.

### Explanation of reference signs:

001: pole;
011: first metal part; 112: first concave portion; 113: first convex portion; 114: third concave portion; 115: fourth convex portion; 116: inverse arch groove;
012: second metal part; 121: terminal; 123: second convex portion; 124: second concave portion; 125: third convex portion; 126: fourth concave portion;
002: cover plate assembly; 021: cover plate; 022: upper plastic part; 023: lower plastic part; 024: current collector.

### DETAILED DESCRIPTION

The technical solutions in the embodiments of the present application will be clearly and completely described below with reference to the accompanying drawings in the embodiments of the present application. Obviously, the described embodiments are merely some embodiments rather than all the embodiments of the present application. Based on the embodiments in the present application, all other embodiments obtained by those skilled in the art without making creative labor shall fall within the protection scope of the present application.

In addition, it should be understood that the specific implementations described herein are only used to illustrate and explain the present application, and are not used to limit the present application. In the present application, the terms "first" and "second" are only used for descriptive purposes, and shall not be understood as indicating or implying relative importance or implicitly indicating the quantity of indicated technical features. Thus, a feature defined with "first" or "second" may explicitly or implicitly include one or more of the features.

In the description of the present application, it should be noted that, unless otherwise clearly specified and limited, the terms "install", "connect" and "connection" shall be understood in a broad sense. For example, they may be fixed connection, detachable connection, or integral connection; may be mechanical connection, electrical connection, or capable of communicating with each other; may be direct connection, or indirect connection through an intermediate medium, and may be communication within two elements or interaction relationship between two elements. For those of ordinary skill in the art, the specific meanings of the above terms in the present application can be understood according to specific situations.

The term "include", "comprise" or any other variants thereof is intended to cover non-exclusive inclusion, so that a product including a series of elements not only includes those elements, but also includes other elements not explicitly listed.

In the description of the embodiments of the present application, words such as "example" or "for example" are used for illustration, explanation or description. Any embodiment or design scheme described as "example" or "for example" in the embodiments of the present application shall not be interpreted as being more preferred than or having more advantages over another embodiment or design scheme. The words such as "example" or "for example" are intended to present relative concepts in a clear manner.

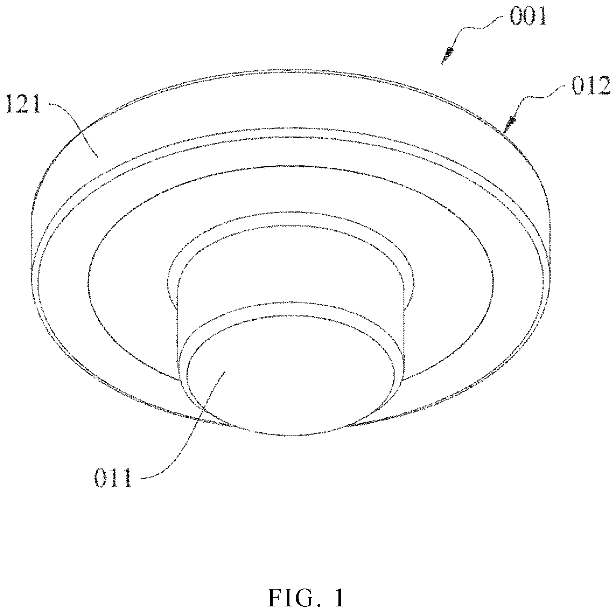

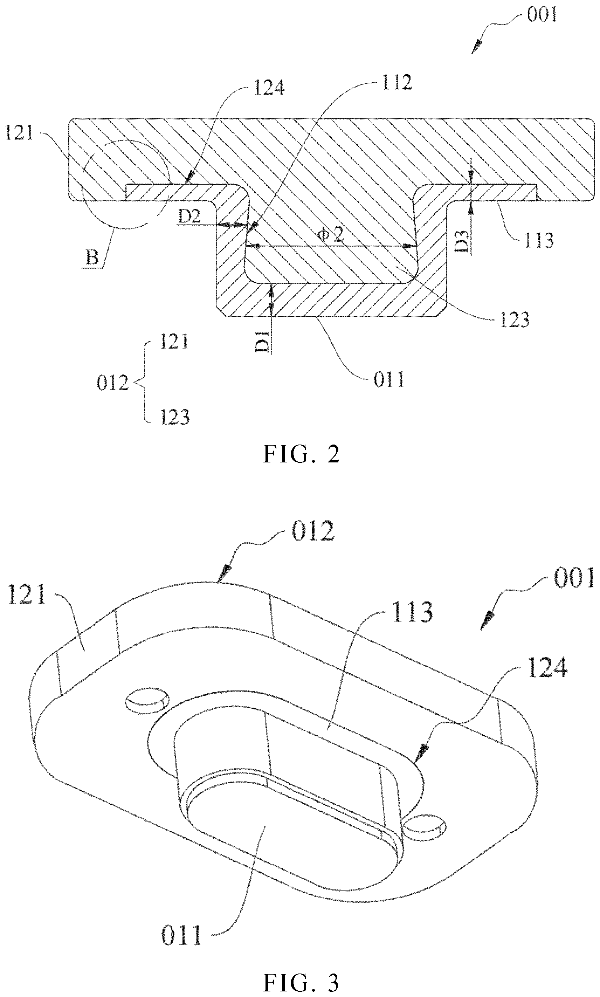

Please refer to Fig. 1 and Fig. 2. Fig. 1 is a schematic structural diagram of a pole 001 provided by embodiments of the present application, and Fig. 2 is a schematic structural diagram of a first longitudinal section of the pole 001 provided by embodiments of the present application. Embodiments of the present application provide a pole 001. The pole 001 includes a first metal part 011 and a second metal part 012.

The first metal part 011 defines a first concave portion 112 and a first convex portion 113. The first convex portion 113 protrudes from the opening of the first concave portion 112 along a direction away from the first concave portion 112. The second metal part 012 includes a terminal 121 and a second convex portion 123. The second convex portion 123 protrudes outward from the terminal 121. A side of the terminal 121 close to the second convex portion 123 is provided with a second concave portion 124. The second concave portion 124 is disposed around the second convex portion 123; where the first convex portion 113 is embedded in the second concave portion 124, the second convex portion 123 is embedded in the first concave portion, and the material of the first metal part 011 and the material of the second metal part 012 are different.

Specifically, along the radial direction of the pole 001, the first convex portion 113 protrudes from the opening of the first concave portion 112 along a direction away from the first concave portion 112.

In addition, one end face of the terminal 121 is connected with the second convex portion 123, and is provided with the second concave portion 124.

Specifically, the first convex portion 113 extends around the outer periphery of the first surface to form a ring shape; the second concave portion 124 extends around the second convex portion 123 to form a ring shape.

It can be understood that the terminal 121 is configured to stop and fit with the cover plate of the battery cell, and the first metal part 011 penetrates through the cover plate. Therefore, the outer diameter of the terminal 121 is larger than the outer diameter of the first metal part 011. Meanwhile, both the first convex portion 113 and the terminal 121 are located on the side of the cover plate away from the electrode assembly.

It can be understood that the first metal part 011 and the second metal part 012 are disposed along the axial direction of the pole 001. The cross-sectional shape of the pole 001 may be circular, triangular, rectangular, polygonal, or the like. For example, the cross-section of the pole 001 is in the shape of a waist circle, as shown in Fig. 3. Fig. 3 is a schematic structural diagram of another pole 001 provided by embodiments of the present application.

It can be understood that the pole 001 can be formed by casting. Specifically, the second metal part 012 can be formed by casting first, and then the first metal part 011 is cast on the second metal part 012, so that the first convex portion 113 is embedded in the second concave portion 124 and the second convex portion 123 is embedded in the first concave portion 112; and, an upsetting method can also be adopted to extrude the second metal part 012 toward the first metal part 011. Thus, the first concave portion 112 is formed on the first metal part 011, the second convex portion 123 embedded in the first concave portion 112 is formed on the second metal part 012, and at the same time, the first metal part 011 is extruded toward the second concave portion 124 to form the first convex portion 113 embedded in the second concave portion 124.

Exemplarily, the first metal part is connected with the electrode assembly, specifically electrically connected with the negative-electrode current collector. The material of the negative-electrode current collector is copper material. Correspondingly, the first metal part is of copper material, and the second metal part is of aluminum material.

In the present embodiment, the second convex portion 123 is disposed to be embedded in the first concave portion 112, so as to form a combination structure of the first metal part 011 and the second metal part 012 in the axial direction of the pole 001, and the first convex portion 113 is embedded in the second concave portion 124 to form a combination structure of the first metal part 011 and the second metal part 012 in the radial direction of the pole 001. In this way, on the premise that the height dimension of the pole 001 is fixed, the area of the combination surface between the first metal part 011 and the second metal part 012 can be increased, and the electrode assembly can pull the first metal part 011, and the cover plate can push the first convex portion 113 toward the terminal 121, thereby improving the reliability of the combination between the first metal part 011 and the second metal part 012.

Specifically, the electrode assembly can pull the first metal part 011, so that the first metal part 011 has a tendency to move toward the inner cavity of the battery. The first convex portion 113 is located on the side of the cover plate away from the inner cavity of the battery, and is in stopping fit with the cover plate. Under the combined action of the limitation of the cover plate and the tendency of the first metal part 011 to move toward the inner cavity of the battery, the first convex portion 113 is pushed against the terminal 121, so that the combination between the first metal part 011 and the second metal part 012 can be enhanced.

In addition, by arranging the terminal 121 and integrating the terminal 121 with the second convex portion 123 as a whole, when the pole 001 is applied to the cover plate assembly, the terminal 121 can be in stopping fit with the cover plate of the cover plate assembly, as as to prevent the pole 001 from falling into the interior of the battery cell; and the terminal 121 can be formed when the second metal part 012 is formed, so as to improve the manufacturing efficiency. Compared with the scheme in the related art where the terminal and the column body are welded, in the present embodiment, by integrating the terminal 121 with the second convex portion 123 as a whole, poor connection reliability of the terminal 121 caused by welding stress can be avoided, so that the reliability of current carrying can be improved.

Moreover, when the first metal part 011 is of the copper material and the second metal part 012 is of the aluminum material, through the above arrangement, the pole 001 can have a larger copper material coating surface. Thus, based on the characteristic that the electrical conductivity of copper is better than the electrical conductivity of aluminum, the electrical performance of the pole 001 can be improved. Specifically, when both the copper material and the aluminum material are present in the current-carrying path, the current-carrying speed through the copper material is faster than the current-carrying speed through the aluminum material, so that the current-carrying speed of the pole 001 can be improved, and thus the electrical performance of the pole 001 is improved.

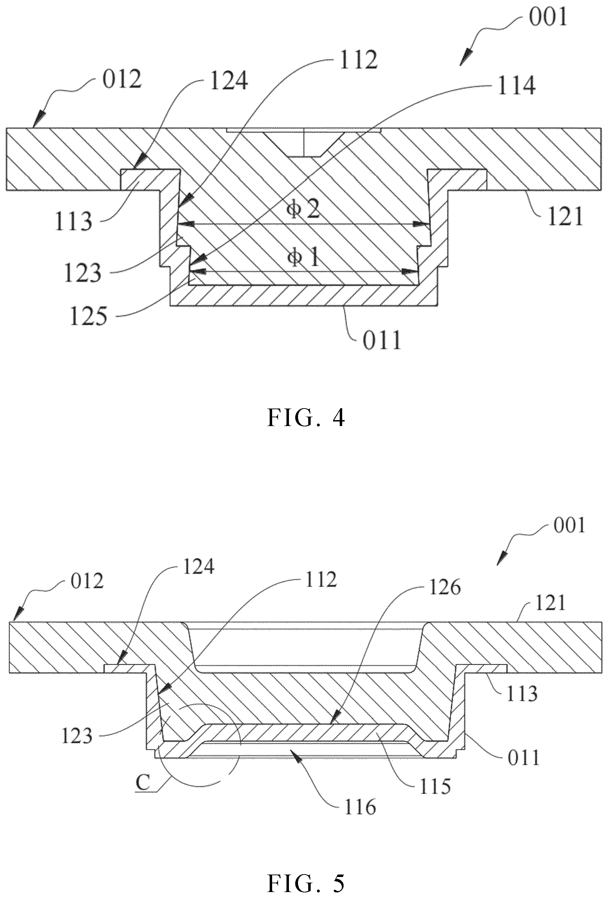

Please refer to Fig. 4. Fig. 4 is a schematic structural diagram of a second longitudinal section of the pole 001 provided by embodiments of the present application. In an embodiment, a third concave portion 114 is disposed on the bottom wall of the first concave portion. A third convex portion is disposed on an end of the second convex portion away from the terminal 121. The third convex portion is embedded in the third concave portion 114. In this way, a multi-stage embedded structure can be formed between the first metal part 011 and the second metal part 012 in the axial direction, so that the reliability of the combination between the first metal part 011 and the second metal part 012 can be improved.

When the pole 001 is formed by upsetting, during upsetting, after the second metal part 012 extrudes a concave on the first metal part 011, the position on the outer periphery of the first metal part 011 that is opposite to the height of the third concave portion 114 is limited by clamping, so that when the second metal part 012 continues to be extruded, the position of the second metal part 012 where the first concave portion is located expands radially outward, thereby forming the first concave portion and the second convex portion.

Please refer to Fig. 4. In an embodiment, the third convex portion has a first radial dimension φ1, and the first radial dimension φ1 gradually decreases along a direction close to the terminal 121. In this way, an undercut structure can be formed between the third convex portion and the third concave portion 114, that is, the third convex portion and the third concave portion 114 are in stopping fit in the axial direction of the pole 001. In this way, the first metal part 011 and the second metal part 012 can be effectively prevented from being separated from each other, so that the reliability of the combination between the first metal part 011 and the second metal part 012 can be improved.

When forming the third concave portion 114, the position on the outer periphery of the first metal part 011 that is opposite to the side of the third concave portion 114 close to the first concave portion can be limited by a clamp, so that when forming the third concave portion 114, the second metal part 012 extrudes the side of the third concave portion 114 away from the first concave portion, thereby realizing that the first radial dimension φ1 gradually decreases along the direction close to the terminal 121.

Please refer to Fig. 5. Fig. 5 is a schematic structural diagram of a third longitudinal section of the pole 001 provided by embodiments of the present application. A fourth convex portion 115 is disposed on the bottom wall of the first concave portion. A fourth concave portion 126 is disposed on an end of the second convex portion away from the terminal 121. The fourth convex portion 115 is embedded in the fourth concave portion 126.

It can be understood that since the materials of the first metal part 011 and the second metal part 012 are different, the fluidity of the two metal materials is inconsistent. Thus, when the pole 001 is formed by upsetting, a wavy combination surface is easily formed at the bottom of the first concave portion, which has an adverse effect on the combination between the first metal part and the second metal part.

Based on this, in the present embodiment, by arranging the fourth concave portion 126 and the fourth convex portion 115 embedded with the fourth concave portion 126, guidance can be provided for the flow of the first metal part 011 and the second metal part 012 based on the formation of the fourth convex portion 115, so that the combination between the first metal part 011 and the second metal part 012 is more reliable.

Please refer to Fig. 5. In an embodiment, the bottom wall of the first concave portion arches toward the second convex portion, so as to form the fourth convex portion 115 inside the first concave portion and to form an inverse arch groove 116 on a side of the first metal part 011 away from the second metal part 012. In this way, the material consumption of the first metal part 011 can be reduced to control the material cost of the pole 001.

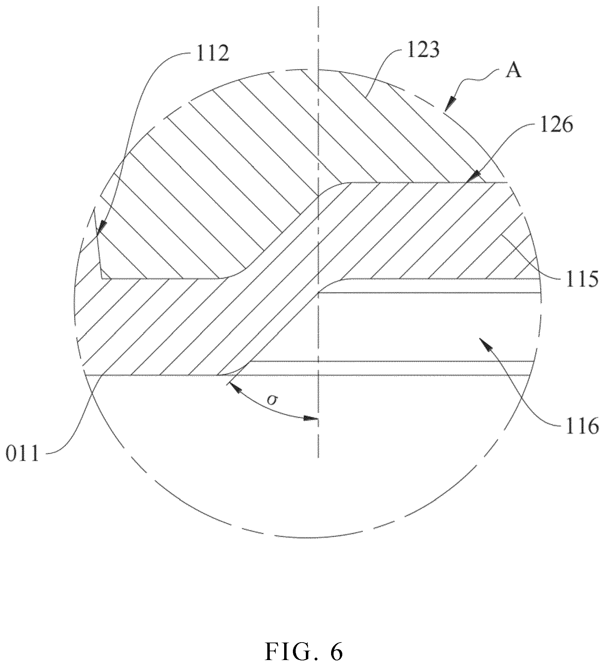

Please refer to Fig. 6. Fig. 6 is an enlarged view of portion A in Fig. 5. In an embodiment, an included angle between a groove wall of the inverse arch groove 116 and an axis of the pole 001 is σ, satisfying: 15°≤σ≤60°. In this way, the first metal part 011 can have good fluidity when forming the second convex portion, so as to improve the ease of operability in forming the pole 001.

Please refer to Fig. 2. In an embodiment, the second convex portion 123 has a second radial dimension φ2, and the second radial dimension φ2 gradually decreases along a direction close to the terminal 121. In this way, an undercut structure can be formed between the second convex portion and the first concave portion, that is, the second convex portion and the first concave portion are in stopping fit in the axial direction of the pole 001. In this way, the first metal part 011 and the second metal part 012 can be effectively prevented from being separated from each other, so that the reliability of the combination between the first metal part 011 and the second metal part 012 can be improved.

When forming the first concave portion, the position on the outer periphery of the first metal part 011 that is opposite to the side of the first concave portion close to the terminal 121 can be limited by a clamp, so that when forming the first concave portion, the second metal part 012 extrudes the side of the first concave portion away from the terminal 121, thereby realizing that the second radial dimension φ2 gradually decreases along the direction close to the terminal 121.

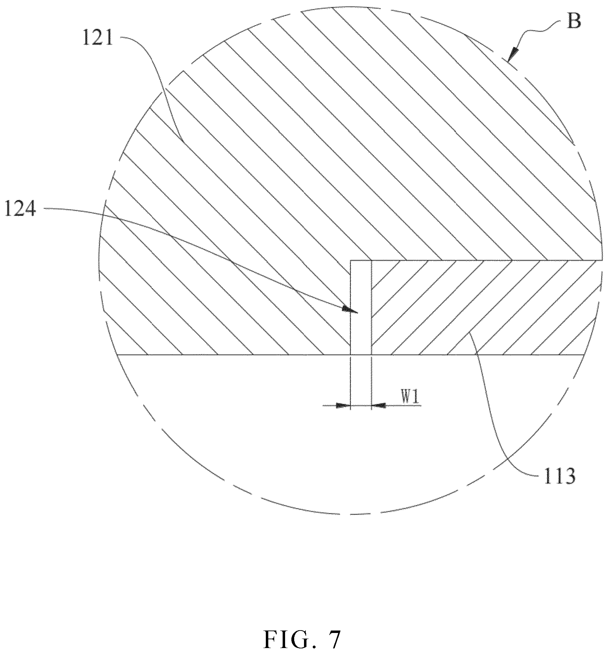

Please refer to Fig. 7. Fig. 7 is an enlarged view of portion B in Fig. 2. In an embodiment, along the radial direction, there is a gap between an outer peripheral surface of the first convex portion 113 and an outer peripheral surface of the second concave portion 124. A distance of the gap is W1, satisfying: 0 <W1≤0.1mm.

It can be understood that the battery cell is often in a charging and discharging state, and the temperature of the battery cell is relatively high during charging and discharging. Therefore, the relevant heated components will be in a thermal expansion state.

Based on this, in the present embodiment, by providing a gap between the outer peripheral surface of the first convex portion 113 and the outer peripheral surface of the second concave portion 124 and limiting the maximum value of the gap to be no more than 0.1mm, not only can the requirement for combination between the first metal part 011 and the second metal part 012 be met to ensure the structural reliability of the pole 001, but also when the first metal part 011 and the second metal part 012 expand, the mutual pushing force between them in the radial direction can be reduced, so as to improve the internal stress state of the pole 001 and reduce the adverse impact of thermal expansion on the connection parts between the pole 001 and other components.

Please refer to Fig. 2. In an embodiment, the thickness of the wall of the first metal part 011 forming the bottom wall of the first concave portion is D1, the thickness of the wall of the first metal part 011 forming the side wall of the first concave portion is D2, and the thickness of the wall of the first metal part 011 forming the first convex portion 113 is D3, satisfying: D1>D2>D3. In this way, the side of the first metal part 011 away from the terminal 121 can have a relatively large thickness, which is beneficial to welding the first metal part 011 with the current collector, and the thickness of the first convex portion 113 can be small, so as to control the material consumption of the first metal part 011.

In an embodiment, 0.5D1≤D2<D1, and/or 0.5D2≤D3 <D2.

It can be understood that it can be 0.5D1≤D2<D1, or 0.5D2≤D3<D2, or 0.5D1≤D2<D1 and 0.5D2≤D3 <D2.

In the present embodiment, by limiting 0.5D1≤D2<D1, the thickness of the wall forming around the first concave portion can be prevented from being too small, so as to avoid it being broken by pulling during forming; by limiting 0.5D2≤D3 <D2, the thickness for forming the first convex portion 113 can be prevented from being too small, so as to avoid it being broken by pulling during forming.

In an embodiment, the material of the first metal part 011 is copper material, and the material of the second metal part 012 is aluminum material. In this way, not only can the low resistance requirement of the pole 001 during current carrying be met to reduce electrical energy loss, but also the material cost of the pole 001 can be controlled, and the economy of the pole 001 can be improved.

In addition, copper materials include but are not limited to pure copper, brass, bronze, phosphor bronze, beryllium bronze, and oxygen-free copper.

Aluminum materials include but are not limited to 1070 aluminum sheet, 1060 aluminum sheet, and L3 aluminum sheet.

In an embodiment, the thickness range of the first metal part 011 is 0.2mm~1mm. In this way, not only can the strength requirement of the first metal part 011 be met, but also the material cost of the first metal part 011 can be controlled, so that the economy of the pole 001 can be improved.

In an embodiment, the current-carrying cross-section of the pole 001 is S1, satisfying: S1≥10mm², and/or the area of the side of the terminal 121 away from the second convex portion is S2, satisfying: 100 mm²≤S2≤300 mm².

It can be understood that in the present embodiment, it can be S1≥10mm², or 100 mm²≤S2≤300 mm², or S1≥10mm² and 100 mm²≤S2≤300 mm².

In the present embodiment, by limiting the current-carrying cross-section of the pole 001, the basic current-carrying capacity of the pole 001 can be ensured to meet the current-carrying requirement of the battery cell; and by limiting the area of the side of the terminal 121 away from the second convex portion, the terminal 121 has a sufficient area for welding with a connection bar, so as to improve the ease of operability in welding the terminal 121 with the connection bar, and the volume of the terminal 121 can be controlled, which is beneficial to the arrangement of other components on an end cover and can control the material cost of the terminal 121.

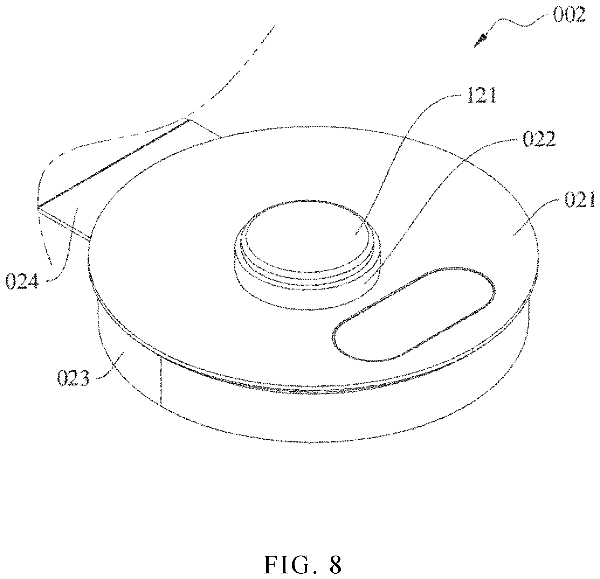

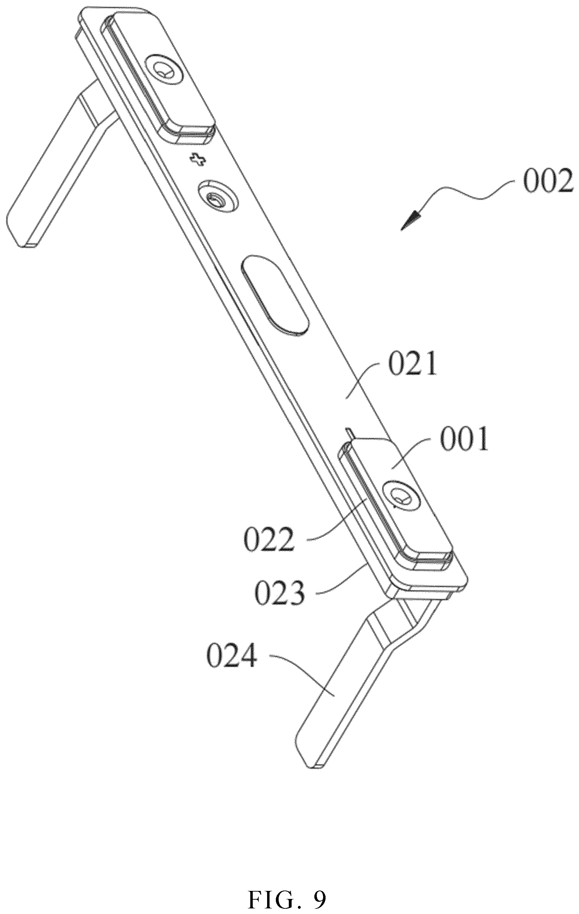

Please refer to Fig. 8 and Fig. 9. Fig. 8 is a schematic structural diagram of a cover plate assembly 002 provided by embodiments of the present application, and Fig. 9 is a schematic structural diagram of another cover plate assembly 002 provided by embodiments of the present application. Correspondingly, embodiments of the present application further provide a cover plate assembly 002. The cover plate assembly 002 includes a cover plate 021, an upper plastic part 022, a lower plastic part 023, a current collector 024, a sealing ring, and the aforementioned pole 001. The pole 001 penetrates through the cover plate 021. The terminal 121 is located on one side of the cover plate 021, and an end of the first metal part 011 away from the terminal 121 is located on another side of the cover plate 021. The upper plastic part 022 is disposed between the terminal 121 and the cover plate 021. The lower plastic part 023 is disposed on another side of the cover plate 021. One end of the current collector 024 is connected with the first metal part 011. The sealing ring is disposed between the pole 001 and a mounting hole. The material of the first metal part 011 is the same as the material of the current collector 024.

The terminal 121 and the first convex portion 113 are both located on the same side of the cover plate 021. Specifically, the side of the terminal 121 and the first convex portion 113 close to the cover plate 021 is in contact with the upper plastic part 022.

It can be understood that the pole 001 provided by embodiments of the present application can be used for the cover plate assembly 002 of a cylindrical battery, as shown in Fig. 8, and can also be used for the cover plate assembly 002 of a square-shell battery, as shown in Fig. 9.

In the present embodiment, by adopting the aforementioned pole 001, based on the structure in which the first metal part 011 and the second metal part 012 are embedded with each other, the area of the combination surface between the first metal part 011 and the second metal part 012 can be increased, and the electrode assembly can pull the first metal part 011, and the cover plate 021 can push the first convex portion 113 toward the terminal 121, thereby improving the reliability of the combination between the first metal part 011 and the second metal part 012. In this way, the structure of the pole 001 is reliable, so that the structural stability of the cover plate assembly 002 can be improved.

Correspondingly, embodiments of the present application further provide a battery cell. The battery cell includes a housing, an electrode assembly, and the aforementioned cover plate assembly 002. The housing has a containing cavity. The electrode assembly is disposed in the containing cavity. The cover plate 021 is connected with the housing and closes the opening of the containing cavity. Another end of the current collector 024 is connected with the electrode assembly. The terminal 121 and the first convex portion 113 are both located on the side of the cover plate 021 away from the electrode assembly.

The electrode assembly includes at least a positive electrode sheet, a separator, and a negative electrode sheet which are disposed in a stacked manner.

It can be understood that the pole 001 is connected with the negative electrode sheet of the battery cell through the current collector 024.

In the present embodiment, by adopting the aforementioned cover plate assembly 002, not only can the area of the combination surface between the first metal part 011 and the second metal part 012 be increased on the premise that the height dimension of the pole 001 is fixed, but also the electrode assembly can pull the first metal part 011, so that the cover plate 021 can push the first convex portion 113 toward the terminal 121, thereby improving the reliability of the combination between the first metal part 011 and the second metal part 012. In this way, the reliability of the battery cell can be improved, so that while the pole 001 meets the current-carrying requirement of the battery cell, the cost can also be controlled, which is beneficial to improving the economy of the battery cell.

The embodiments of the present application are introduced in detail above. Specific examples are used herein to illustrate the principles and implementation manners of the present application. The description of the above embodiments is only used to help understand the method and core idea of the present application; meanwhile, for those skilled in the art, according to the idea of the present application, there will be changes in the specific implementation manners and application scopes. In conclusion, the content of this specification should not be understood as a limitation to the present application.

## Claims

1. A pole (001), **characterized by** comprising:
a first metal part (011), defining a first concave portion (112) and a first convex portion (113), wherein the first convex portion (113) protrudes from an opening of the first concave portion (112) along a direction away from the first concave portion (112); and
a second metal part (012), comprising a terminal (121) and a second convex portion (123), wherein the second convex portion (123) protrudes outward from the terminal (121), a side of the terminal (121) close to the second convex portion (123) is provided with a second concave portion (124), and the second concave portion (124) is disposed around the second convex portion (123);
wherein the first convex portion (113) is embedded in the second concave portion (124), the second convex portion (123) is embedded in the first concave portion (112), and materials of the first metal part (011) and the second metal part (012) are different.

2. The pole (001) according to claim 1, **characterized in that** a third concave portion (114) is disposed on a bottom wall of the first concave portion (112), a third convex portion (125) is disposed on an end of the second convex portion (123) away from the terminal (121), and the third convex portion (125) is embedded in the third concave portion (114).

3. The pole (001) according to claim 2, **characterized in that** the third convex portion (125) comprises a first radial dimension φ1, and the first radial dimension φ1 gradually decreases along a direction close to the terminal (121).

4. The pole (001) according to claim 1, **characterized in that** a fourth convex portion (115) is disposed on the bottom wall of the first concave portion (112), a fourth concave portion (126) is disposed on an end of the second convex portion (123) away from the terminal (121), and the fourth convex portion (115) is embedded in the fourth concave portion (126).

5. The pole (001) according to claim 4, **characterized in that** the bottom wall of the first concave portion (112) arches toward the second convex portion (123), to form the fourth convex portion (115) in the first concave portion (112), and to form an inverse arch groove (116) on a side of the first metal part (011) away from the second metal part (012).

6. The pole (001) according to claim 5, **characterized in that** an included angle between a groove wall of the inverse arch groove (116) and an axis of the pole (001) is σ, satisfying: 15°≤σ≤60°.

7. The pole (001) according to any of claim 1 to claim 6, **characterized in that** the second convex portion (123) comprises a second radial dimension φ2, and the second radial dimension φ2 gradually decreases along a direction close to the terminal (121).

8. The pole (001) according to any of claim 1 to claim 6, **characterized in that**, along a radial direction, a gap is formed between an outer peripheral surface of the first convex portion (113) and an outer peripheral surface of the second concave portion (124), and a distance of the gap is W1, satisfying: 0<W1≤0.1mm.

9. The pole (001) according to any of claim 1 to claim 6, **characterized in that** a thickness of a wall of the first metal part (011) forming the bottom wall of the first concave portion (112) is D1, a thickness of a wall of the first metal part (011) forming a side wall of the first concave portion (112) is D2, a thickness of a wall of the first metal part (011) forming the first convex portion (113) is D3, satisfying: D1 >D2>D3.

10. The pole (001) according to claim 9, **characterized in that** 0.5D1≤D2<D1, and/or 0.5D2≤D3 <D2.

11. The pole (001) according to claim 1, **characterized in that** the material of the first metal part (011) is copper material, and the material of the second metal part (012) is aluminum material.

12. The pole (001) according to claim 11, **characterized in that** a thickness range of the first metal part (011) is 0.2mm~1mm.

13. The pole (001) according to any one of claims 1-6, **characterized in that** a current-carrying cross-section of the pole (001) is S1, satisfying: S1≥10mm², and/or an area of a side of the terminal (121) away from the second convex portion (123) is S2, satisfying: 100 mm²≤S2≤300 mm².

14. A cover plate assembly (002), **characterized by** comprising:
a cover plate (021);
a pole (001) according to any of claim 1 to claim 13, wherein the pole (001) penetrates through the cover plate (021), the terminal (121) is located on one side of the cover plate (021), and an end of the first metal part (011) away from the terminal (121) is located on another side of the cover plate (021);
an upper plastic part (022), disposed between the terminal (121) and the cover plate (021);
a lower plastic part (023), disposed on another side of the cover plate (021);
a current collector (024), wherein one end of the current collector (024) is connected with the first metal part (011); and
a sealing ring, disposed between the pole (001) and a mounting hole;
wherein the material of the first metal part (011) is the same as material of the current collector (024).

15. A battery cell, **characterized by** comprising:
a housing, comprising a containing cavity;
an electrode assembly, disposed in the containing cavity; and
a cover plate assembly (002) according to claim 14, wherein the cover plate (021) is connected with the housing and closes an opening of the containing cavity, another end of the current collector (024) is connected with the electrode assembly; and, the terminal (121) and the first convex portion (113) are both located on a side of the cover plate (021) away from the electrode assembly.
